# EUROPÄISCHE PATENTANMELDUNG

(11) **EP 2 412 227 A2**
(43) Veröffentlichungstag der Anmeldung: **01.02.2012**
(21) Anmeldenummer: 11175720.9
(22) Anmeldetag: 28.07.2011
(51) Int. Cl.: A01D 43/063

(54) **Grasauffangbox für einen Rasenmäher und Verpackungsanordnung**

(30) Priorität: 29.07.2010 DE 202010010807 U
(71) Anmelder: Einhell Germany AG, 94405 Landau / Isar (DE)
(72) Erfinder: Ellerstorfer, Thomas, 93413 Cham (DE)
(74) Vertreter: Benninger, Johannes

(57) **Zusammenfassung**

Die vorliegende Erfindung betrifft eine Grasauffangbox (1) für einen Rasenmäher (3), der einen Motor und ein Gehäuse (9) mit Grasauswurf (11) aufweist. Die Grasauffangbox (1) besteht aus wenigstens zwei miteinander verbindbaren Teilen (5,7), wobei die zwei miteinander verbindbaren Teile (5,7) der Grasauffangbox (1) in einer Transportposition (A) getrennt voneinander angeordnet sind und wobei der erste Teil (5) einen Aufnahmeraum (21) ausbildet, der das Gehäuse (9) des Rasenmähers (3) in der Transportposition zumindest teilweise umschließt, und wobei der zweite Teil (7) im Bereich des Grasauswurfs (11) angeordnet ist. Weiterhin betrifft die vorliegende Erfindung eine Verpackungsanordnung (2), umfassend mindestens einen Rasenmäher mit Gehäuse und eine aus mindestens zwei miteinander verbindbaren Teilen gebildete Grasauffangbox.

## Beschreibung

Die vorliegende Erfindung betrifft eine Grasauffangbox für einen Rasenmäher, der einen Motor und ein Gehäuse mit Grasauswurf aufweist. Die Grasauffangbox besteht aus wenigstens zwei miteinander verbindbaren Teilen. Weiterhin betrifft die vorliegende Erfindung eine Verpackungsanordnung, umfassend mindestens einen Rasenmäher mit Gehäuse und eine aus mindestens zwei miteinander verbindbaren Teilen gebildete Grasauffangbox.

Aus dem Stand der Technik sind unterschiedliche Ausführungsvarianten von Grasauffangboxen für Rasenmäher bekannt. Einen Rasenmäher mit Grasauffangbox offenbart bspw. die DE 199 34 636 C2.

Ein solcher Rasenmäher mit Grasauffangbox benötigt beim Transport aufgrund des großen Volumens der Auffangbox viel Raum. Zum verbesserten Transport offenbart der Stand der Technik daher Grasauffangboxen, welche in mehrere Einzelteile zerlegt werden können. Solche Grasauffangboxen werden bspw. durch die DE 27 43 115 A1 oder durch die DE 10 2005 017 405 A1 offenbart.

Häufig werden Grasauffangboxen zusammen mit dem zur jeweiligen Grasauffangbox zugehörigen Rasenmäher verpackt. Trotz der mehrteiligen Ausgestaltung nehmen die aus dem Stand der Technik bekannten Grasauffangboxen zusammen mit dem Rasenmäher während des Transportes ein hohes Volumen ein, welches nach Möglichkeit gering gehalten werden soll.

Eine vorrangige Aufgabe der Erfindung besteht daher darin, eine Grasauffangbox für einen Rasenmäher zur Verfügung zu stellen, welche zumindest während des Transportes zusammen mit dem Rasenmäher ein optimiertes Volumen aufweist. Weiter soll das benötigte Volumen von Rasenmäher und Grasauffangbox auf einfache und unkomplizierte Weise reduziert werden können.

Diese Aufgabe der Erfindung wird durch eine Grasauffangbox mit den Merkmalen des unabhängigen Anspruchs 1 und durch eine Verpackungsanordnung mit den Merkmalen des Anspruchs 8 gelöst. Merkmale vorteilhafter Weiterbildungen der Erfindung ergeben sich aus den jeweiligen abhängigen Ansprüchen. Zur Lösung der genannten Aufgabe schlägt die Erfindung eine aus wenigstens zwei miteinander verbindbaren Teilen gebildete Grasauffangbox für einen Rasenmäher vor, die zumindest in einer Transportposition oder einer Transportstellung getrennt voneinander angeordnet sind und lösbar miteinander verbindbar sind, sobald der Rasenmäher in Betrieb genommen werden soll. Dabei bildet vorzugsweise ein erster Teil der mehrteiligen Grasauffangbox einen Aufnahmeraum aus, der das Gehäuse des Rasenmähers in der Transportposition zumindest teilweise umschließt. Auf diese Weise kann eine sehr platzsparende Transportanordnung geschaffen werden, bei der der transportierte Rasenmäher teilweise von der zerlegten Grasauffangbox umhüllt wird. Der zweite Teil kann dabei bspw. im Bereich des Grasauswurfs angeordnet sein. Der einen Motor und ein Gehäuse mit einem Grasauswurf aufweisende Rasenmäher kann auf die beschriebene Weise mit Hilfe der erfindungsgemäß teilbaren Grasauffangbox besonders platzsparend transportiert werden, wodurch sich erhebliche Logistikvorteile und Kosteneinsparungen aufgrund des reduzierten Stauvolumens der verpackten und/oder transportierten Rasenmäher ergeben.

Bei einer weiteren Variante der erfindungsgemäßen Grasauffangbox kann zumindest der zweite Teil der Grasauffangbox in der Transportposition zumindest in einzelnen Bereichen bzw. abschnittsweise zwischen zwei Laufrädern des Rasenmähers angeordnet sein. Wenn im vorliegenden Zusammenhang von einer Grasauffangbox die Rede ist, so sind damit grundsätzlich alle Arten von flexiblen oder steifen Grasauffangbehältern für Rasenmäher umfasst, die typischerweise lösbar am Rasenmäher zu verankern sind und die eine Verbindung zu dessen Grasauswurf herstellen, um das gemähte und seitlich oder rückwärts ausgeworfene Schnittgut aufzunehmen und zu sammeln. Wahlweise kann der erste Teil der Grasauffangbox aus zwei miteinander verbindbaren Hälften gebildet sein, die in einer Betriebsposition des Rasenmähers im Bereich des Grasauswurfs angeordnet sind und während des Betriebes einen Aufnahmeraum ausbilden, der gegenüber dem Aufnahmeraum während des Transportes reduziert ausgebildet ist.

Vorteilhaft ist es zudem, wenn die zwei miteinander verbindbaren Teile und/oder die zwei miteinander verbindbaren Hälften während des Betriebes des Rasenmähers jeweils formschlüssig und/oder kraftschlüssig und/oder reibschlüssig miteinander verbunden sind. Die Verbindung der beiden Hälften bzw. Teile kann bspw. mittels an sich bekannter Rastverbindungen, mittels Schraub-, Klemm- oder sonstiger Verbindungen erfolgen, die mit oder ohne Zuhilfenahme von Werkzeug wieder geöffnet werden können, um bspw. die Teile oder Hälften für einen erneuten Transport des Rasenmähers wieder beschädigungsfrei voneinander trennen zu können. Wahlweise können die zwei miteinander verbindbaren Teile und/oder die zwei miteinander verbindbaren Hälften jeweils unlöslich oder lediglich mittels Werkzeug lösbar miteinander verbunden sein.

Weiterhin kann vorgesehen sein, dass die zwei miteinander verbindbaren Hälften während des Betriebes des Rasenmähers und/oder während des Transportes spiegelsymmetrisch zueinander angeordnet sind. Weiterhin kann vorgesehen sein, dass die zwei miteinander verbindbaren Hälften jeweils entgegen oder in Richtung der jeweils anderen Hälfte weisende korrespondierende Kontaktelemente und/oder Rastelemente umfassen.

Zusammenfassend ergeben sich die folgenden Aspekte der vorliegenden Erfindung. Die Grasauffangbox ist vorgesehen für einen Rasenmäher mit einem Motor und einem Gehäuse mit Grasauswurf. Der Motor kann beispielsweise ein durch Kraftstoff betriebener Motor oder ein Elektromotor sein. Weiterhin kann der Motor am Gehäuse angeordnet sein. In einigen Ausführungsformen kann das Gehäuse den Motor in seiner Gesamtheit oder in Teilen umschließen. Das Gehäuse kann aus Kunststoff hergestellt sein und beispielsweise auf seiner dem Benutzer des Rasenmähers zugewandten Seite den Grasauswurf aufweisen. Ferner besteht die Grasauffangbox aus mindestens zwei miteinander verbindbaren Teilen. Im Rahmen der vorliegenden Erfindung soll die Grasauffangbox nicht auf lediglich zwei miteinander verbindbare Teile reduziert sein. Vielmehr existieren Ausführungsformen, bei denen die Grasauffangbox beispielsweise aus drei, vier oder mehr miteinander verbindbaren Teilen besteht. Die miteinander verbindbaren Teile können beispielsweise über Rast- und/oder Schnapp- und/oder Klemmverbindungen miteinander verbindbar sein.

Die zwei miteinander verbindbaren Teile der Grasauffangbox sind während des Transportes getrennt voneinander angeordnet. Der erste Teil bildet hierbei einen Aufnahmeraum aus, der das Gehäuse des Rasenmähers zumindest teilweise umschließt. Der zweite Teil ist im Bereich des Grasauswurfs angeordnet. Beispielsweise können der erste und/oder der zweite Teil während des Transportes über lösbare Klemm- und/oder Rast- und/oder Schnapp- und/oder weitere Verbindungen am Rasenmäher gehalten sein.

Beispielsweise kann zumindest der zweite Teil der Grasauffangbox während des Transportes in einzelnen Bereichen oder vollständig zwischen zwei Laufrädern des Rasenmähers angeordnet sein. Beispielsweise kann es sich hierbei um zwei hintere Laufräder des Rasenmähers handeln.

In einer Ausführungsform der vorliegenden Erfindung kann der erste Teil der Grasauffangbox aus zwei miteinander verbindbaren Hälften gebildet sein, die währen des Betriebes des Rasenmähers im Bereich des Grasauswurfs angeordnet sind und während des Betriebes einen Aufnahmeraum ausbilden, der gegenüber dem Aufnahmeraum während des Transportes reduziert ausgebildet ist. Beispielsweise können beide Hälften über miteinander korrespondierende Kontaktelemente verfügen, nach deren Verbindung der Aufnahmeraum reduziert ausgebildet ist. Ferner können die zwei miteinander verbindbaren Teile und/oder die zwei miteinander verbindbaren Hälften während des Betriebes des Rasenmähers jeweils formschlüssig und/oder kraftschlüssig und/oder reibschlüssig miteinander verbunden sein. Auch kann beispielsweise ein dritter Teil vorhanden sein, der während des Betriebes formschlüssig und/oder kraftschlüssig und/oder reibschlüssig mit dem ersten und/oder mit dem zweiten Teil verbunden ist. Auch können die zwei miteinander verbindbaren Teile und/oder die zwei miteinander verbindbaren Hälften jeweils unlöslich oder lediglich mittels Werkzeug lösbar miteinander verbunden sein. Des Weiteren können die zwei miteinander verbindbaren Hälften während des Betriebes des Rasenmähers und/oder während des Transportes spiegelsymmetrisch zueinander angeordnet sein. Die Symmetrieebene kann beispielsweise parallel zur Laufrichtung des Rasenmähers bei geradliniger Bewegung verlaufen. Auch können weitere Komponenten des Rasenmähers oder der gesamte Rasenmäher zumindest annäherungsweise symmetrisch ausgebildet sein.

In einer Ausführungsform der vorliegenden Erfindung weisen die zwei miteinander verbindbaren Hälften jeweils entgegen der jeweils anderen Hälfte weisende korrespondierende Kontaktelemente und/oder Rastelemente auf. Die Kontaktelemente und/oder Rastelemente können während des Betriebes des Rasenmähers miteinander verbunden sein. Sind die beiden Teile spiegelsymmetrisch zueinander angeordnet, können die Kontakt- bzw. Rastelemente während des Transportes und/oder während des Betriebes des Rasenmähers zur Symmetrieebene weisen. Im Hinblick auf die materielle Ausgestaltung der Grasauffangbox stehen dem Fachmann eine Vielzahl von Materialien zur Verfügung. Beispielsweise kann die Grasauffangbox aus Kunststoff ausgebildet sein. Ferner kann der Kunststoff mit Additiven und/oder Verstärkungen versehen sein.

Die Erfindung betrifft ferner eine Verpackungsanordnung umfassend mindestens einen Rasenmäher mit Gehäuse und eine aus mindestens zwei miteinander verbindbaren

Teilen gebildete Grasauffangbox. Die zwei miteinander verbindbaren Teile der Grasauffangbox sind während des Transportes getrennt voneinander angeordnet. Der erste Teil bildet einen Aufnahmeraum aus, welches das Gehäuse des Rasenmähers zumindest teilweise umschließt. Der zweite Teil ist im Bereich des Grasauswurfs angeordnet. Zudem kann beispielsweise eine den Rasenmäher und die Grasauffangbox umhüllende Kartonage vorgesehen sein. Weiter können der Rasenmäher und/oder der erste Teil und/oder der zweite Teil der Grasauffangbox über Abstandselemente mit der Kartonage in Oberflächenkontakt gebracht sein. Beispielsweise können die Abstandselemente als Styropor, Luftpolser, Schaumstoffe oder ähnliche Dämpfmittel ausgebildet sein. Auch kann eine Symmetrieebene vorhanden sein, welche die Verpackungsanordnung zumindest annäherungsweise in zwei spiegelsymmetrische Hälften teilt. Die Symmetrieebene kann beispielsweise vertikal und in geradliniger Bewegungsrichtung des Rasenmähers verlaufen.

Die erfindungsgemäße Verpackungsanordnung ermöglicht einen besonders platzsparenden Transport aller getrennten und ggf. erst für den Betrieb des Rasenmähers zusammengebauten Einzelteile, da die Grasauffangbox so gestaltet ist, dass sie in der Verpackung durch zumindest teilweise Umhüllung des Rasenmähers nur einen geringen zusätzlichen Raum beansprucht.

Die Erfindung wird nachfolgend anhand von Ausführungsbeispielen unter Bezugnahme auf die nachfolgend beschriebenen Zeichnungen näher erläutert. Die Figuren illustrieren und verdeutlichen ein nicht einschränkend zu verstehendes Ausführungsbeispiel der vorliegenden Erfindung in seinen Details.
Fig. 1 zeigt eine Perspektivansicht einer Grasauffangbox an einem Rasenmäher im Transportzustand sowie eine Ausführungsform einer Verpackungsanordnung der vorliegenden Erfindung.
Fig. 2 zeigt eine weitere Perspektivansicht einer Grasauffangbox an einem Rasenmäher im Transportzustand sowie eine weitere Ausführungsform einer Verpackungsanordnung der vorliegenden Erfindung
Fig. 3 zeigt eine Perspektivansicht einer Ausführungsform einer Grasauffangbox an einem Rasenmäher im Betriebszustand.
Fig. 4 zeigt eine schematische Ansicht eines ersten Teils einer Grasauffangbox im Transportzustand und eines ersten Teils einer Grasauffangbox im Betriebszustand mit reduziertem Aufnahmeraum.

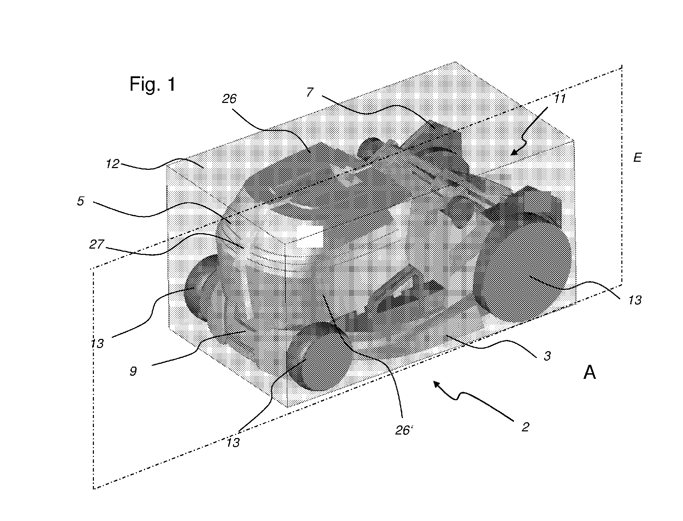

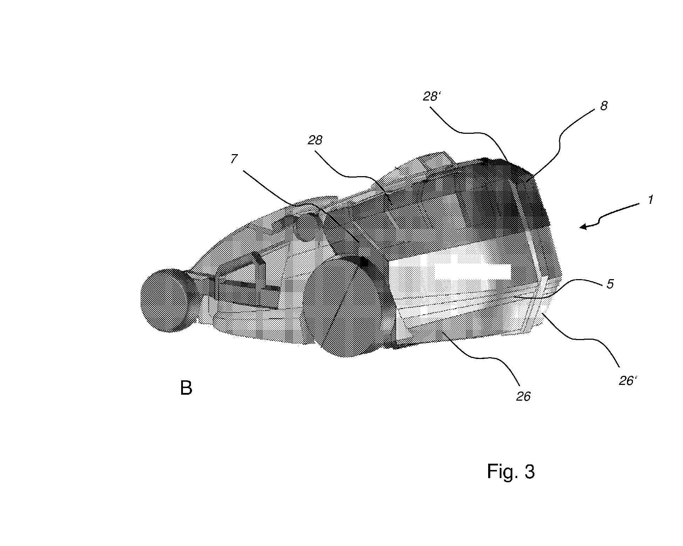

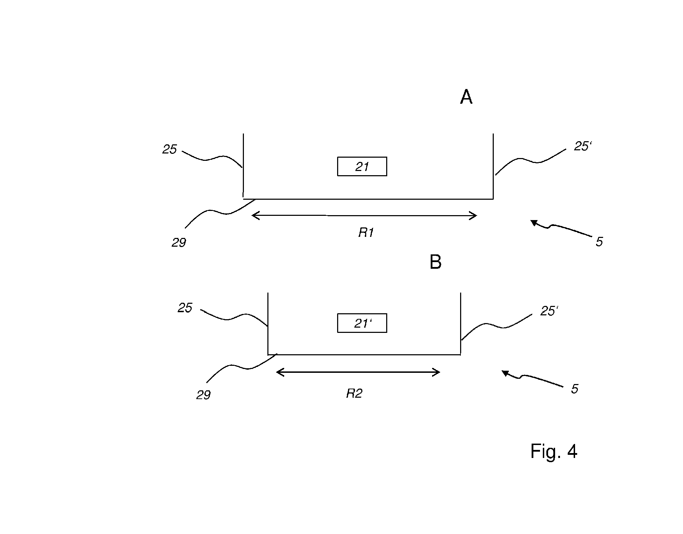

Die schematische Perspektivansicht der Fig. 1 zeigt eine Grasauffangbox 1 (vgl. Fig. 3) an einem Rasenmäher 3 im Transportzustand A sowie eine Ausführungsform einer Verpackungsanordnung 2. Der Rasenmäher 3 verfügt über mehrere Laufräder 13. Im hinteren Bereich des Rasenmähers 3 befindet sich der Grasauswurf 11. Die Grasauffangbox 1 ist aus zwei miteinander verbindbaren Teilen 5 und 7 gebildet, die im gezeigten Transportzustand A getrennt voneinander angeordnet sind. Der erste Teil 5 bildet einen Aufnahmeraum 21 (siehe hierzu Fig. 4) aus, der ein Gehäuse 9 des Rasenmähers 3 teilweise umschließt. Der zweite Teil 7 ist im Bereich des Grasauswurfs 11 angeordnet. Die Verpackungsanordnung 2 umfasst eine den Rasenmäher 3 und die Grasauffangbox 1 umhüllende Kartonage 12. Der erste Teil 5 der Grasauffangbox 1 ist aus zwei über eine Kontaktstelle 27 miteinander verbindbaren Hälften 26 und 26' gebildet. Im gezeigten Transportzustand A der Figur 1 sind die beiden Hälften 26 und 26' nicht miteinander verbunden oder zumindest nicht unlöslich miteinander verbunden. Weiter sind die beiden Hälften 26 und 26' symmetrisch zur Ebene E angeordnet.

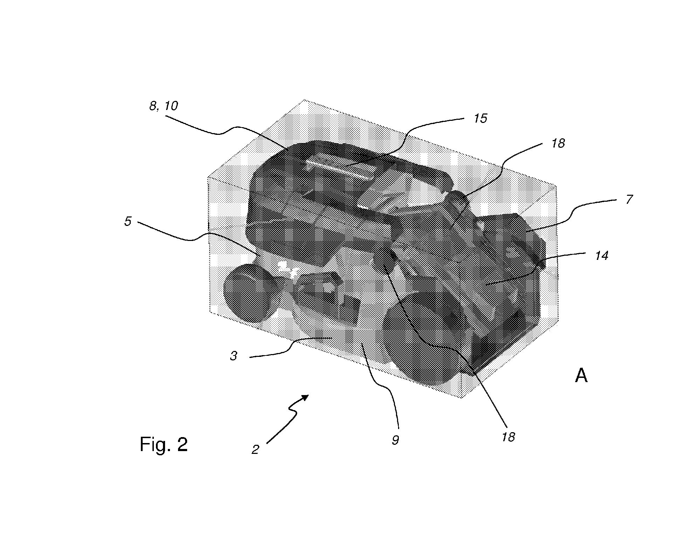

Die Darstellung der Fig. 2 zeigt eine weitere Perspektivansicht einer Grasauffangbox 1 an einem Rasenmäher 3 im Transportzustand A sowie eine weitere Ausführungsform einer Verpackungsanordnung 2 der vorliegenden Erfindung. Die Grasauffangbox 1 umfasst im gezeigten Ausführungsbeispiel einen ersten Teil 5, einen zweiten Teil 7 und einen dritte Teil 8, vorliegend als Deckel 10 ausgebildet. Der Deckel 10 bildet einen Aufnahmeraum aus, der den ersten Teil 5 zumindest teilweise umschließt. Am Deckel 10 ist ein Griff 15 angeordnet. Der Deckel 10 kann ebenso wie der erste Teil 5 der in Fig. 1 gezeigten Ausführungsform aus zwei Hälften 28 und 28' (siehe Fig. 3) gebildet sein. Weiter ist eine Klappe 14 schwenkbar am Rasenmäher 3 gehalten. Ferner umfasst der zweite Teil 7 der Grasauffangbox 1 zwei Köpfe 18, die am Gehäuse 9 des Rasenmähers 3 eingehängt sind.

Die Fig. 3 zeigt eine Perspektivansicht einer Ausführungsform einer Grasauffangbox 1 an einem Rasenmäher 3 im Betriebszustand B. Die Grasauffangbox 1 ist wie in der in Fig. 2 gezeigten Ausführungsform dreiteilig ausgebildet. Der erste Teil 5 und der zweite Teil 7 und der dritte Teil 8 sind im Betriebszustand B miteinander verbunden. Die Verbindung kann beispielsweise durch Formschluss und/oder Kraftschluss erfolgen. Weiter sind die beiden Hälften 26 und 26' des ersten Teils 5 sowie die beiden Hälften 28 und 28' des dritten Teils 8 kraftschlüssig und/oder formschlüssig miteinander verbunden. Die Teile können bspw. miteinander verrastet, verschraubt oder anderweitig miteinander verbunden sein.

Die Darstellung der Fig. 4 zeigt eine schematische Ansicht eines ersten Teils 5 einer Grasauffangbox 1 im Transportzustand A und eines ersten Teils 5 einer Grasauffangbox 1 im Betriebszustand B mit reduziertem Aufnahmeraum 21 der erste Teil 5 umfasst eine erste und eine zweite Seitenwand 25 und 25' sowie eine untere Gehäusewand 29. Die Seitenwände 25 und 25' des ersten Teils 5 im Betriebszustand B weisen einen geringeren Relativabstand R2 gegenüber dem Relativabstand R1 der Seitenwände 25 und 25' des ersten Teils 5 im Transportzustand A auf.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 1: Grasauffangbox
- 2: Verpackungsanordnung
- 3: Rasenmäher
- 5: Grasauffangbox erster Teil
- 7: Grasauffangbox zweiter Teil
- 8: Grasauffangbox dritter Teil
- 9: Gehäuse
- 10: Deckel
- 11: Grasauswurf
- 12: Kartonage
- 13: Laufrad
- 14: Klappe
- 15: Griff
- 18: Kopf
- 21: Aufnahmeraum
- 21': reduzierter Aufnahmeraum
- 25: Erste Seitenwand von erstem Teil
- 25': Zweite Seitenwand von erstem Teil
- 26: erste Hälfte von erstem Teil
- 26': zweite Hälfte von erstem Teil
- 27: Kontakstelle
- 28: erste Hälfte von drittem Teil
- 28': zweite Hälfte von drittem Teil
- 29: untere Gehäusewand
- A: Transportzustand
- B: Betriebszustand
- R1: Erster Relativabstand Seitenwände
- R2: Zweiter Relativabstand Seitenwände
- E: Symmetrieebene

## Patentansprüche

1. Aus wenigstens zwei miteinander verbindbaren Teilen (5, 7) gebildete Grasauffangbox (1) für einen Rasenmäher (3), der einen Motor und ein Gehäuse (9) mit einem Grasauswurf aufweist (11), wobei die zwei miteinander verbindbaren Teile (5, 7) der Grasauffangbox (1) in einer Transportposition (A) getrennt voneinander angeordnet sind, wobei der erste Teil (5) einen Aufnahmeraum (21) ausbildet, der das Gehäuse (9) des Rasenmähers (3) in der Transportposition (A) zumindest teilweise umschließt, und wobei der zweite Teil (7) im Bereich des Grasauswurfs (11) angeordnet ist.

2. Grasauffangbox nach Anspruch 1, bei der zumindest der zweite Teil (7) der Grasauffangbox (1) in der Transportposition (A) zumindest in einzelnen Bereichen bzw. abschnittsweise zwischen zwei Laufrädern (13) des Rasenmähers (3) angeordnet ist.

3. Grasauffangbox nach Anspruch 1 oder 2, wobei der erste Teil (5) der Grasauffangbox (1) aus zwei miteinander verbindbaren Hälften (26, 26') gebildet ist, die in einer Betriebsposition (B) des Rasenmähers (3) im Bereich des Grasauswurfs (11) angeordnet sind und während des Betriebes (B) einen Aufnahmeraum (21 ') ausbilden, der gegenüber dem Aufnahmeraum (21) während des Transportes (A) reduziert ausgebildet ist.

4. Grasauffangbox nach einem der Ansprüche 1 bis 3, bei der die zwei miteinander verbindbaren Teile (5, 7) und/oder die zwei miteinander verbindbaren Hälften (26, 26') während des Betriebes (B) des Rasenmähers (1) jeweils formschlüssig und/oder kraftschlüssig und/oder reibschlüssig miteinander verbunden sind.

5. Grasauffangbox nach Anspruch 4, bei der die zwei miteinander verbindbaren Teile (5, 7) und/oder die zwei miteinander verbindbaren Hälften (26, 26') jeweils unlöslich oder lediglich mittels Werkzeug lösbar miteinander verbunden sind.

6. Grasauffangbox nach Anspruch 5, bei der die zwei miteinander verbindbaren Hälften (26, 26') während des Betriebes (B) des Rasenmähers (3) und/oder während des Transportes (A) spiegelsymmetrisch zueinander angeordnet sind.

7. Grasauffangbox nach Anspruch 6, bei der die zwei miteinander verbindbaren Hälften (26, 26') jeweils entgegen der jeweils anderen Hälfte (26, 26') weisende korrespondierende Kontaktelemente und/oder Rastelemente umfassen.

8. Verpackungsanordnung (2), umfassend mindestens einen Rasenmäher (3) mit einem Gehäuse (9) und eine aus mindestens zwei miteinander verbindbaren Teilen (5, 7) gebildete Grasauffangbox (1) gemäß einem der Ansprüche 1 bis 7, wobei die zwei miteinander verbindbaren Teile (5, 7) der Grasauffangbox (1) während des Transportes (A) getrennt voneinander angeordnet sind, wobei der erste Teil (5) einen Aufnahmeraum (21) ausbildet, der das Gehäuse (9) des Rasenmähers (3) zumindest teilweise umschließt und wobei der zweite Teil (7) im Bereich des Grasauswurf (11) angeordnet ist.

9. Verpackungsanordnung nach Anspruch 8, bei der eine den Rasenmäher (3) und die Grasauffangbox (1) umhüllende Kartonage (12) vorgesehen ist und der Rasenmäher (3) und/oder der erste Teil (5) und/oder der zweite Teil (7) der Grasauffangbox (1) über Abstandselemente mit der Kartonage (12) in Oberflächenkontakt gebracht sind.

10. Verpackungsanordnung nach Anspruch 9, bei der eine Symmetrieebene (E) vorhanden ist, durch welche die Verpackungsanordnung (2) zumindest annäherungsweise in zwei spiegelsymmetrische Hälften geteilt ist.
